Europäisches Patentamt

European Patent Office

Office européen des brevets

(11) Publication number: **0 386 391**
**A1**

# EUROPEAN PATENT APPLICATION

(21) Application number: 89830100.7

(51) Int. Cl.5: **A01K 1/01**

(22) Date of filing: 07.03.89

(43) Date of publication of application:
**12.09.90 Bulletin 90/37**

(84) Designated Contracting States:
**AT BE CH DE ES FR GB LI NL**

(71) Applicant: **ASSOGRAPH ITALIA S.R.L.**
**Via Biancamano, 14**
**I-20052 Monza Milano(IT)**

(72) Inventor: **Galber, Maria Adele Assograph**
**Italia S.r.l.**
**Via Biancamano, 14**
**I-20052-Monza (Milano)(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) **Hygienic disposable container for small domestic animals.**

(57) The present invention relates to a disposable or single-use container for small domestic animals, comprising a bottom element (1) provided, along the sides thereof, with foldable and associable flaps (2) adapted to be folded so as to define a box-like body including an absorbing material (9) bed, which is pressed and sealed by a cover member (10) to be removed as the container is to be used.

Fig.3

# HYGIENIC DISPOSABLE CONTAINER FOR SMALL DOMESTIC ANIMALS

## BACKGROUND OF THE INVENTION

The present invention relates to a disposable or single use container for small domestic animals.

As is known, there are presently particular sands able of absorb odors and liquids released by small domestic animlas, such as cats and the like.

These sands are supplied in multiple-dose bags, therefrom said sands are withdrawn from the user and poured into metal or plastics material small basins which are located at given zones of a home to receive excretions from home animals.

After the use, the sand must be discharged and the basin cleaned, which represents a disagreeable job for the user.

## SUMMARY OF THE INVENTION

Accordingly, the aim of the present invention is to overcome the above mentioned drawback, by providing a container for the mentioned hygienic sands which, after use, can be easily disposed of.

Within the scope of the above task, a main object of the present invention is to provide such a container which has a very reduced size and is very reliable in operation.

According to one aspect of the present invention, the above mentioned task and objects, as well as yet other objects, which will become more apparent hereinafter, are achieved by a hygienic disposable container for small domestic animals, characterized in that said container comprises a bottom member provided, along the sides thereof, with foldable and mutually associable flaps adapted to define a box-like body including an absorbing material bed ,which is sealed and pressed by a cover member to be removed as said container is to be used.

## BRIEF DESCRIPTION OF THE DRAWINGS

Further characteristics and advantages of the invention will become more apparent hereinafter from the following detailed description of a preferred, though not exclusive embodiment, of a disposable hygienic container according to the invention, which is illustrated, by way of an indicative but not limitative example, in the figures of the accompanying drawings, where:

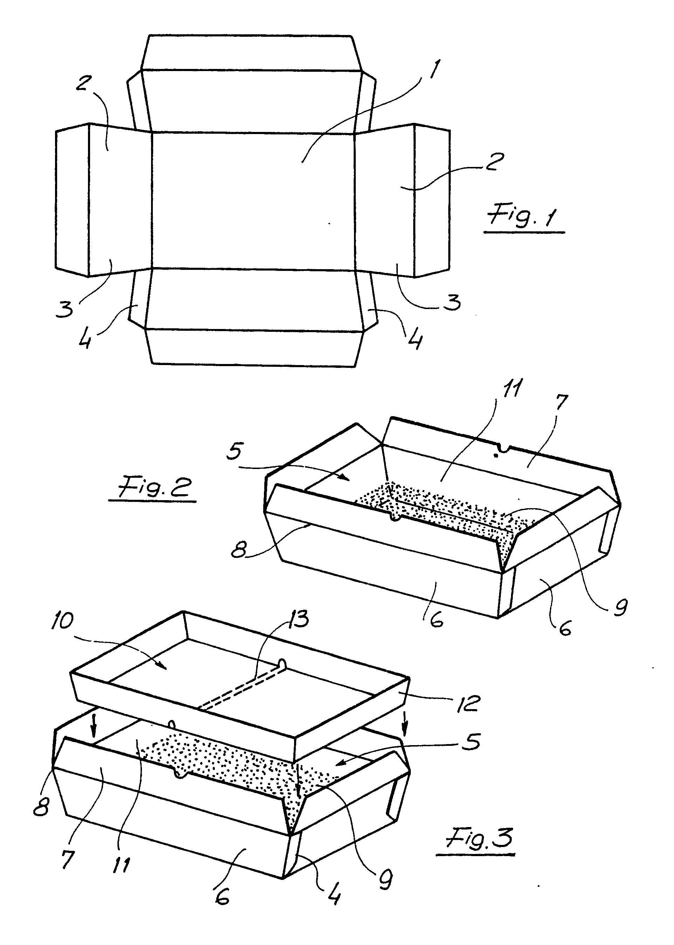

figure 1 is a top plan view of the container according to the present invention, in its open condi tion, that is with not folded flaps;

figure 2 is a perspective view of the subject container, after the folding of the side flaps thereof and hafter having introduced therein suitable absorbing material;

figure 3 is another perspective view of the subject container, during the application of a removable cover member;

figure 4 is yet another perspective view of the subject container, with its side flaps being folded;

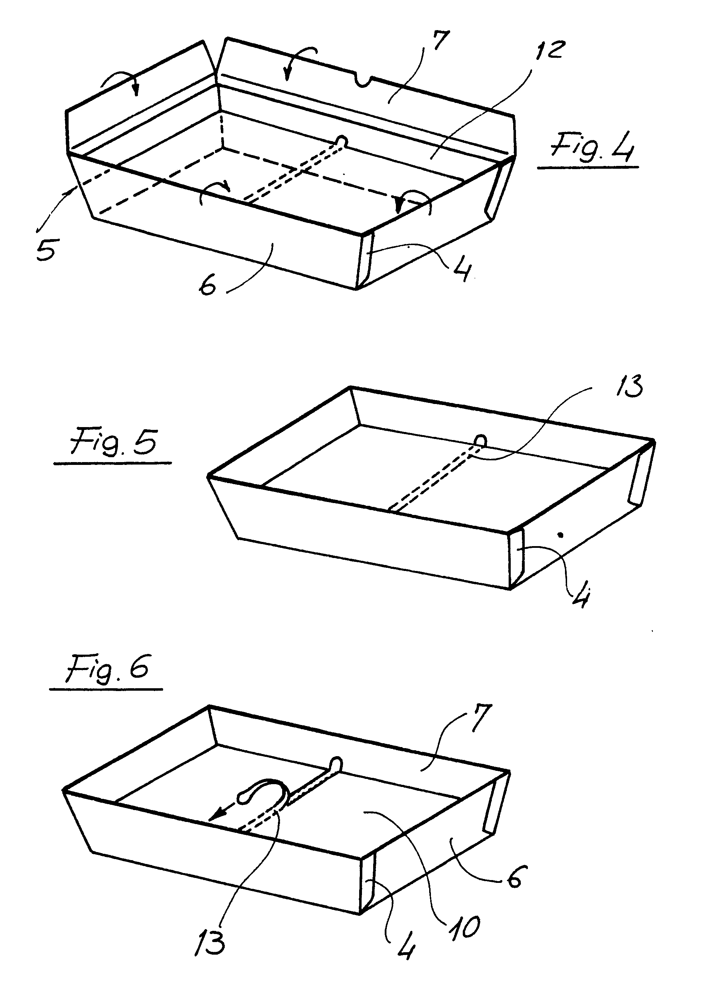

figure 5 illustrates the subject container with the cover thereof being completely engaged;

figure 6 shows the subject container at the start of the cover member opening operation;

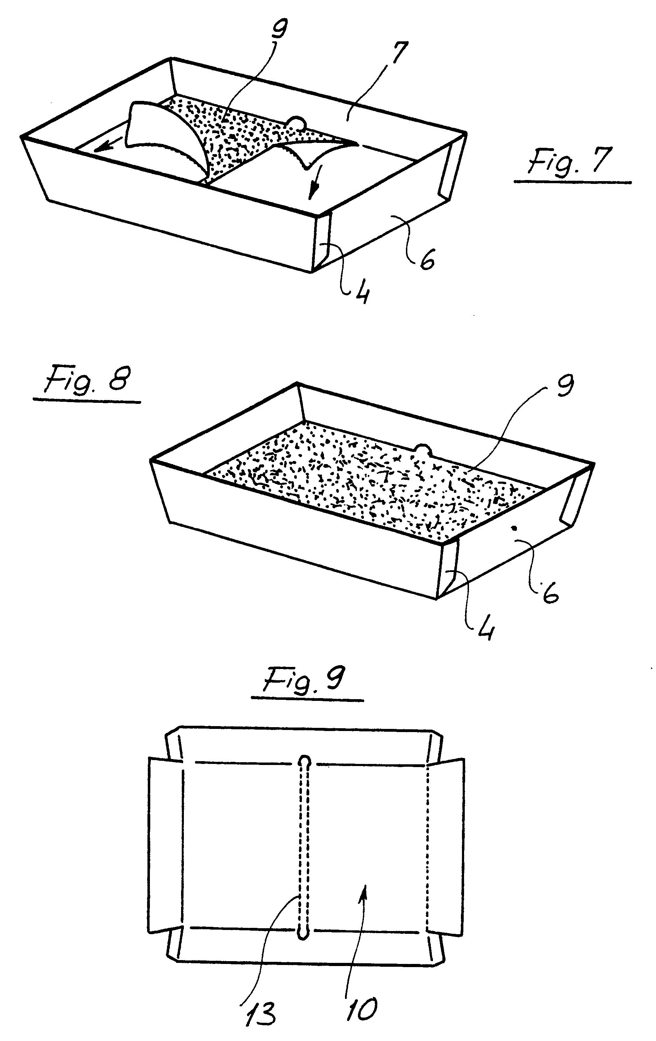

figure 7 shows the container during the cover member opening step;

figure 8 shows the container with the cover member thereof in a fully open condition;

figure 9 is a top plan view of the cover member with the side wall in a non folded condition.

## DESCRIPTION OF THE PREFERRED EMBODIMENT

With reference to the figures of the accompanying drawings, the disposable container according to the present invention comprises a bottom member, of substantially rectangular shape, 1 which is provided, at the sides thereof, with trapezoidal flaps 2.

These flaps 2 are provided, along adjoining pairs of side edges, with respectively adhesive portions 3 and coupling lugs 4 so that, as the flaps are upwardly folded, the coupling lugs 4 will be affixed along said adhesive portions 3.

Thus, a box-like body will be formed, indicated overally at the reference number 5, which will be provided with four side faces 6 which, at the top, are provided with further trapezoidal lugs 7 which can be upturned about a weakened dashed zone 8, which longitudinally extends, and is provided at the top edge of the side faces 6, so as to cause said trapezoidal lugs to adhere to the inner surface of said faces 6.

Within the box-like body 5 there is arranged, as it is made, a given amount of absorbing material 9, preferably consisting of a known absorbing sand, and then a concave basin shape hollow cover member is applied from the top.

This cover member 10 can be engaged in the recess 11, defined by the top portion of the box-like body so as to abut, with its bottom, against the sand bed 9 and present its walls 12 in contact with the inner faces of the walls 6 of the box-like body 5.

Thus, the cover member 10 will tightly close the package and compact the sand; as the container is to be used, the cover member 10 will be completely removed owing the the provision of a weakened zone 15 formed along a middle region of said cover member.

After the use the container will be disposed of and replaced with another like container.

From the above disclosure it should be apparent that the invention fully achieves the intended task and objects.

In particular the fact is to be pointed out that, in handling the subject container, the user will never contact the contained sand.

Another important aspect of the invention is that the subject container can be easily stacked with other like containers, thereby occupying a very reduced space.

In practicing the invention the used materials and size can be any according to requirements.

## Claims

1- A hygienic disposable container for small domestic animals, characterized in that said container comprises a bottom member provided, along the sides thereof, with foldable and mutually associable flaps adapted to define a box-like body including an absorbing material bed, which is sealed and pressed by a cover member to be removed as said container is to be used.

2- A container according to claim 1, characterized in that said flaps have a trapezoidal shape and are provided, along pairs of adjoining side edges thereof, with adhesive portions and coupling lugs, respectively.

3- A container according to claims 1 and 2, characterized in that said box-like body is provided, on the top of the sidewalls thereof, with further trapezoidal lugs adapted to be upturned about a weakened zone formed at the top edge of said sidewalls, so as to cause said further trapezoidal lugs to adhere to the inner surface of said sidewalls.

4- A container according to one or more of the preceding claims, characterized in that said absorbing material consists of absorbing sand arranged in bed form.

5- A container according to one or more of the preceding claims, characterized in that said cover member has a concave basin shape and is adapted to be engaged in a recess defined in the top portion of said box-like body so as to abut, with its bottom, against said absorbing sand bed and present its side-walls in contact with the inner surfaces of said side-walls or said box-like body.

6- A container according to one or more of the preceding claims, characterized in that said cover member is provided, on the top thereof, with a weakened removable zone.

Fig.1

Fig.2

Fig.3

Fig. 4

Fig. 5

Fig. 6

_Fig. 7_

_Fig. 8_

_Fig. 9_

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,A | US-A-4 553 671 (A. CHEESMAN) <br> * complete document * <br> --- | 1-3 | A 01 K 1/01 |
| A | EP-A-0 246 831 (J. L. MARTIN et al.) <br> * claims; figures * <br> --- | 4-6 | |
| A | WO-A-8 706 459 (C. GERMANO et al.) <br> * page 4, first paragraph; claims; figures * <br> ----- | 1,4 | |
| | | | TECHNICAL FIELDS SEARCHED (Int. Cl.5) <br><br> A 01 K |

The present search report has been drawn up for all claims

| Place of search | Date of completion of the search | Examiner |
|---|---|---|
| BERLIN | 25-10-1989 | WUNDERLICH J E |

EPO FORM 1503 03.82 (P0401)